# EUROPEAN PATENT SPECIFICATION

(11) **EP 1 362 738 B1**
(45) Date of publication and mention of the grant of the patent: **26.01.2005**
(21) Application number: 02380118.6
(22) Date of filing: 10.06.2002
(51) Int. Cl.: B60N 3/06

(54) **Footrest for vehicle seats**
Fussstütze für Fahrzeugsitze
Appui-pieds pour sièges de véhicules

(43) Date of publication of application: 19.11.2003
(73) Proprietor: Asientos Esteban, S.L., 31012 Pamplona (Navarra) (ES)
(72) Inventor: Gil Unamuno, Jaime, Calle L (I. ESTEBAN), 31012 Pamplona, Navarra (ES)
(74) Representative: Maldonado Jordan, Julia

(56) References cited:
- EP-A- 0 236 847
- EP-A- 0 355 743
- EP-A- 0 419 788
- EP-A- 0 543 050
- EP-A- 0 751 038
- DE-U- 9 210 254
- DE-U- 29 704 970

## Description

### OBJECT OF THE INVENTION

This invention consists of a footrest suitable for vehicle seats as described in the preamble of claim 1, to be attached to the lower part of the rear side of a seat, so that the person occupying the seat immediately behind can rest his/her feet on it.

The object of the invention is to provide a footrest for vehicle seats that may be used in various positions, allowing a certain degree of mobility for the user's feet and legs and providing more comfort on long trips. The particular characteristics of the footrest allow it to be adapted and used in concert halls, etc.

### BACKGROUND TO THE INVENTION

Passenger transport vehicles, such as coaches and other similar means of transport, normally do not have footrests, which is highly uncomfortable for users, especially on long journeys.

There are no footrests due to the scarcity of available space, whereas installing a footboard or other such rest would first of all obstruct the passenger's access to his/her corresponding seat and on the other hand, impede correct mobility for the feet when the passenger does not wish to make use of the accessory, so that the installation of a footrest at the lower part of the rear side of a vehicle seat merely provides a raised bracket for the feet of the user in the seat immediately behind, but not the possibility of a comfortable change of position for the feet, which is what is really required in such a case.

A footrest foldable in non-use position and deployable in multiple use positions of different angles is shown in the document DE 9 210 254 U.

### DESCRIPTION OF THE INVENTION

The characteristics of the proposed footrest compensate for the aforementioned problems and inconveniences, particularly the issue of improving passenger comfort on long journeys, by avoiding the discomfort of always remaining in the same position, avoiding the so-called lethal "tourist death" caused by remaining in the same position for long periods of time, i.e. without any mobility in the seat.

To be more specific, the footrest is formed by a tilting arm which has bracket pedals that are movable so as to occupy at all times and in all the footrest positions the most comfortable position or the position required by the user.

At the other end, the aforementioned arm is articulately installed on a bracket which is fixed on the lower part of the rear side of the vehicle seat, whereas this bracket has a fitting or tilting axis for the aforementioned arm with the pedals, as well as a fixed axis that functions as a limit on the maximum tilt of the aforementioned arm and also a fitting axis for an element that functions as a latch, allowing the pedal arm to be set in various positions, i.e. at different angles, so that the arm and therefore the bracket pedals can occupy a horizontal position, or various tilted positions, which together with the fact that the pedals may be turned around, provides a great variety of positions for the user's feet; therefore affording the latter mobility for his/her feet and legs and doing away with the need to remain in the same position for the duration of a long journey.

The element that functions as a latch is connected to a spring that tends to maintain a constantly fixed position, whereas the latch has a crossbar or bolt that is worked by another spring that tends to hold it in the normal rest position, by placing the ends of the bolt on cogs built on the arm for this purpose; so that from this normal rest position and by pushing the arm downwards, thereby overcoming the spring mechanism that maintains the aforementioned bolt in the blocked position, the arm and therefore the footrest is released and tilted downwards until it occupies another tilted position, which is fixed by means of a purpose-built hook, which in turn has sliding ramps connected to a bolt on the arm, onto which the latch hook is attached, in the various angle positions of the arm itself with respect to the fixed bracket.

In the rest position, there is also an anchoring mechanism determined by a system that holds the elements established in the latch, which are clasped and attached to the bar that makes up the arm's tilting axis, whereas the latter has two crossbars to set the latch hook in place, providing two tilting positions for the arm and therefore, the footrest.

The last spring is placed between the arm and the bracket, which drives the arm from the maximum tilting or sloping position, where the force of the spring is minimal, to the resting or horizontal position of the spring, where its traction force is at a maximum.

### DESCRIPTION OF THE DRAWINGS

In order to complete the description and with the aim of allowing for a better understanding of the characteristics of this invention, according to an example of the preferred embodiment of the same, a set of drawings is attached as an integral part of this description, representing the following in an illustrative and non-restrictive manner:
Figure 1.- Shows a side elevation view of the footrest that is the object of the invention, in the rest position, with a detail of the anchorage of the arm in the aforementioned rest position.
Figure 2.- Shows another side elevation view of the first position of the arm at an angle to the bracket.
Figure 3.- Shows another side elevation view corresponding to a second position of the same arm at an angle to the bracket, whereas in this case the arm is at a larger angle than in the previous figure.
Figure 4.- Shows another side elevation view of the same footrest, with the tilted arm in the limit position, stopped by the bar established for this purpose in the bracket of the aforementioned arm, whereas the figure also shows the possibility of tilting the pedals installed on the open end of the arm belonging to the footrest.

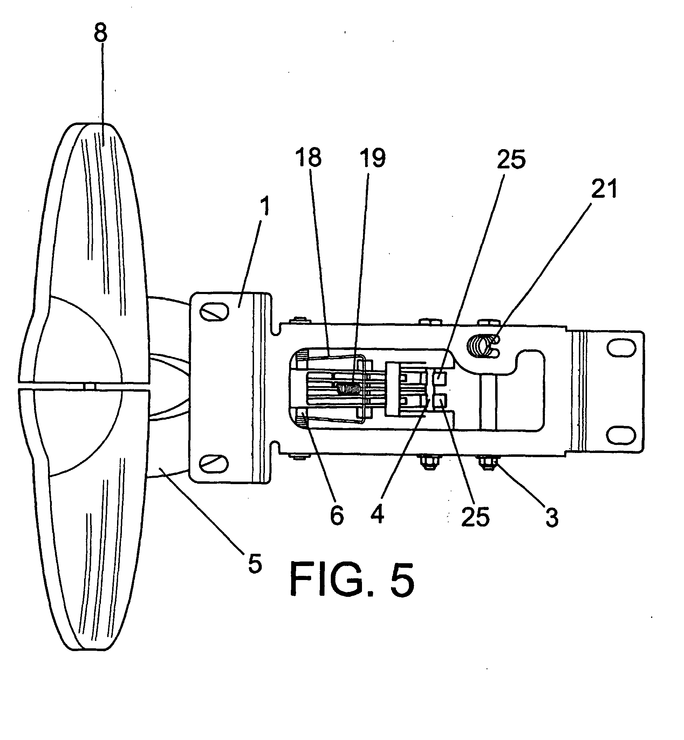

Figure 5.- Shows, finally a superior ground view of the footrest represented in the previous figures.

### PREFERRED EMBODIMENT OF THE INVENTION

In the figures described, we can see that the footrest that is the object of this invention is formed by a bracket (1) that is firmly attached to the lower part of the rear side of a seat in a vehicle or a concert hall, if the footrest is being applied in this context. This bracket (1) has an upper plate by which it is attached to the seat, and two side plates (2), which are parallel and at a distance from each other, between which the following components are placed: a bolt (3), a fitting and tilting axis (4) for the arm (5), and an axis (6) on which a latch (7) is fitted and turned.

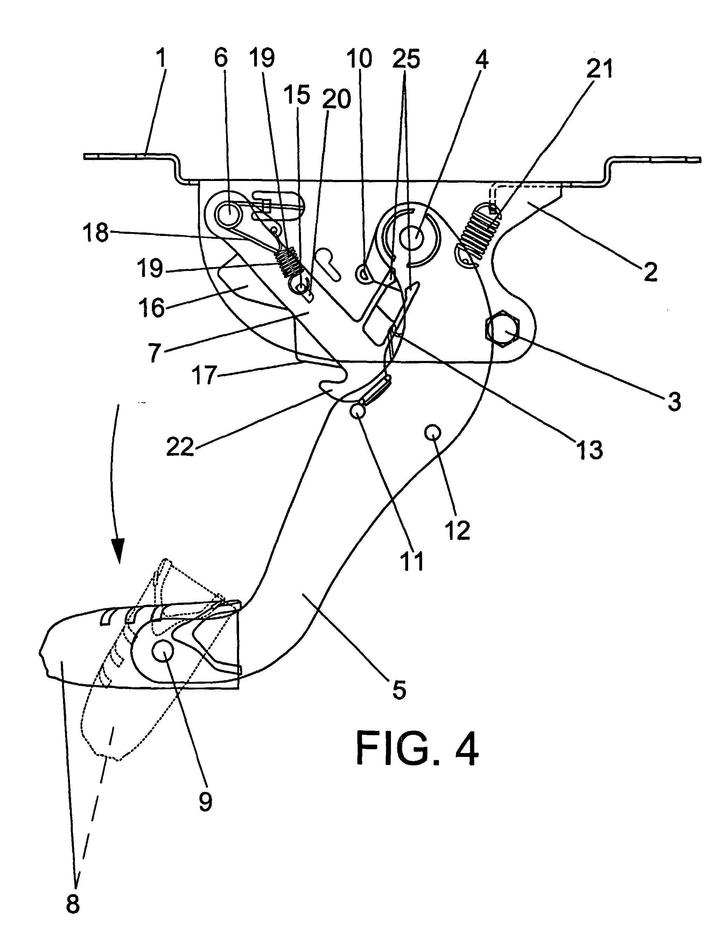

The open end of the arm (5) has a pair of pedals (8) that are the elements on which the feet are directly supported; pedals (8), which are fitted on an axis (9) on which they can tilt, as represented in figure 4, with the aim of finding the position that is most convenient and comfortable to the user.

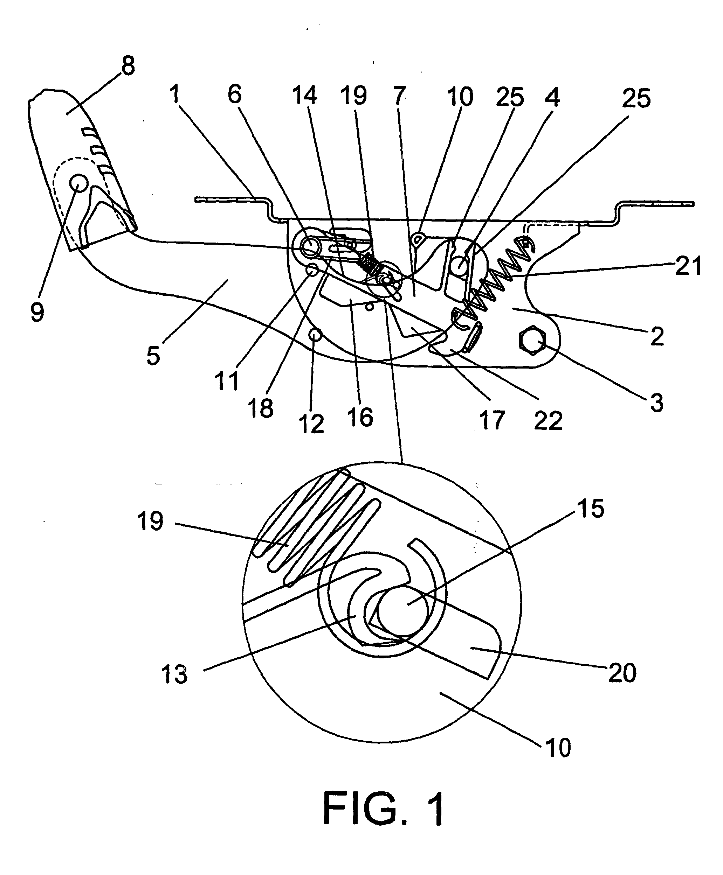

In correspondence with the end of the arm (5) which moves around the axis (4), there is a transversal push-bar (10), while in approximately intermediate areas there are two transversal bolts (11) and (12) whose function shall be explained later, whereas the aforementioned arm (5) also has a curved-concave surface (14), established on either side of the latch (7), on whose surface (14) there are two hooks (13) to which a bar(15) is attached transversally to the latch (7), whereas the latter is held in place by a spring (18) fitted on the axis (6) and acting on the latch (7) itself, tending to push it backwards, whereas the aforementioned latch also has a second spring (19) attached to the bar itself (15), as is clearly shown in the detailed representation in figure 1. The bar (15), whose ends stick out on either side of the latch (7), is mounted on respective rails (20) materialised on respective long windows on either side of the latch (7).

There is also another spring (21) attached between the bracket (1) and the arm (5), whose function shall also be explained later.

Finally, as for the structural characteristics, the latch (7) has a hook (22) on its open end, which may be attached to any of the cross bars (11) and (12) on the arm (5), whereas this latch (7) has plate brackets (16) and (17) that function as sliding ramps for the aforementioned cross bars (11) and (12); which upon sliding, allow the arm (5) to be tilted, set at an angle to the bracket (1) and fixed in place.

According to the aforementioned characteristics, we can see that in figure 1, the footrest is in the rest position, so that the arm (5) is in a practically horizontal position, in which the bar (15) is fixed on the hooks (13) established for this purpose on the concave part (14) of the arm (5), whereas when the arm is tilted, the bar slides over the concave part of same, so that the spring (19) acts in traction and forces the aforementioned bar (15) against the hooks (13) that constitute two fixing cogs.

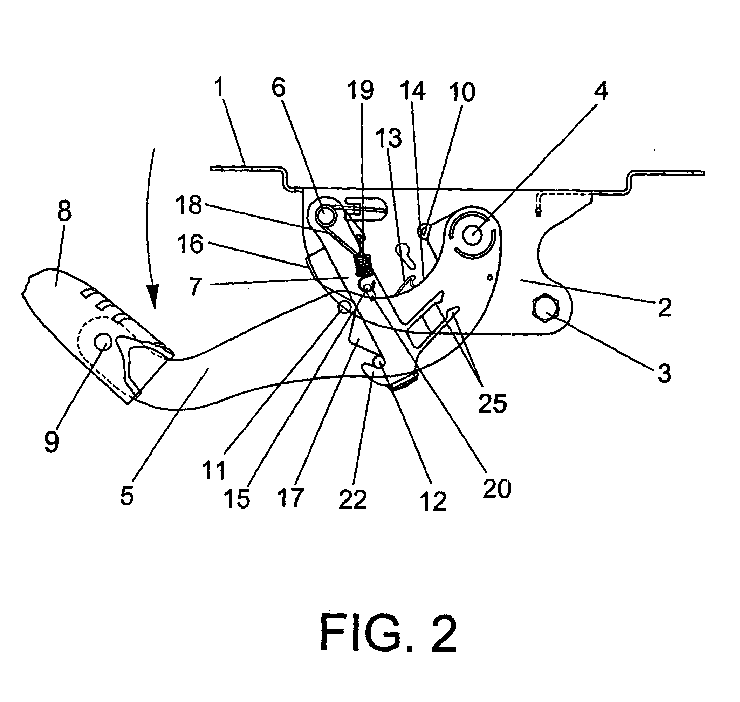

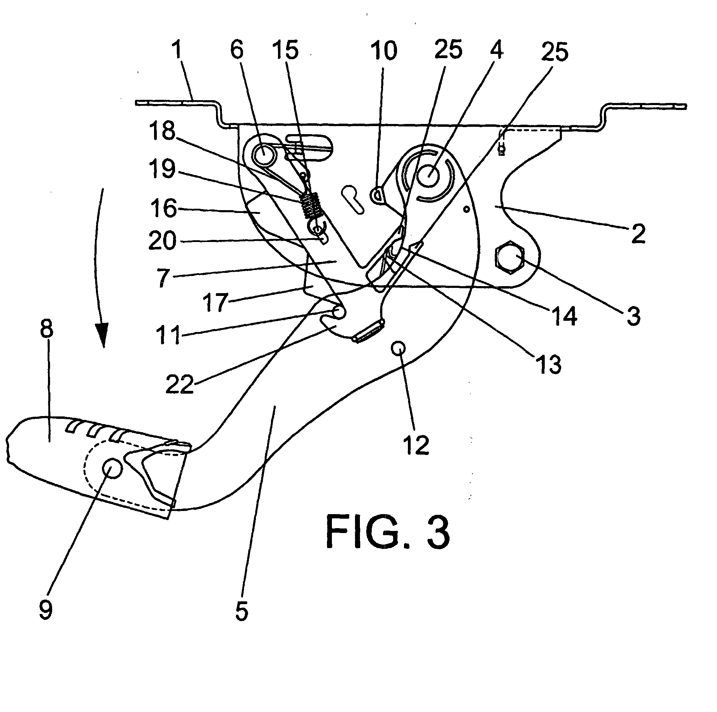

From this position, the footrest arm can be tilted to a greater or lesser degree, simply by pushing it downwards, as indicated by the arrow in figure 2 or in figures 3 and 4, so that to go from the position in figure 1 to the position represented in figure 2, it shall suffice to press the pedals (8) downwards with the feet, thereby overcoming the resistance of the spring (19), releasing the bar (15) from the cogs or hooks (13) and tilting the arm (5) downwards as shown in figure 2, whereas it may be fixed in position by placing the hook (22) of the latch (7) in the bolt (12), as represented in figure 2, or, if the user continues to press the arm (5) downwards, the latter may be fixed in position on the bolt (11), which corresponds to a position where the arm is at a larger angle, as represented in figure 3. Figure 4 shows the maximum angle at which the arm itself (5) may be tilted, where it is stopped by the bolt (3) of the bracket (1), or, in other words, placed between the sides (2) of the aforementioned bracket.

We should add that in the rest position represented in figure 1, the footrest is strengthened by the fastening effect of the elastic pins (25) on the axis (4), whereas the pins logically belong to the latch (7) and hold the arm (5) firmly in position.

## Claims

1. A footrest for use on vehicle seats, intended to be attached to the lower part of the rear side of a seat in a vehicle or a chair, so that the user in the seat immediately behind may rest his/her feet on the pedals established for this purpose on the footrest itself; formed by a bracket (1), which is attached to the seat, to which a tilting arm (5) is attached, whereas on the open end of the arm, there are the pedals (8) to support the user's feet and the aforementioned arm (5) is fitted to tilt on a transversal axis and **characterised by** the fact that said arm (5) is connected to a latch (7), which is also fitted on the same bracket (1) by means of a turning axis (6); whereas this latch (7) has a cross bar (15) held in place by a spring (19), which may be set in the respective cogs or hooks (13) provided for this purpose on the arm (5), in order to maintain the arm in the rest or horizontal position; whereas pushing the aforementioned arm (5) downwards overcomes the action of the spring (19) and allows the user to release the bar (15) from the hooks or cogs (13) and tilt the aforementioned arm (5) downwards, where it is held in place by means of a hook (22) on the latch (7) in the respective transversal bolts (11) and (12), which correspond to the two angular positions in which the arm (5) may be held.

2. A footrest for vehicle seats, according to the 1^{st} claim, **characterised by** the fact that the latch (7) is associated to a spring (18) mounted on a turning axis (6), which acts upon the aforementioned latch (7), while the arm (5) is related to a spring (21) attached to the bracket itself (1).

3. A footrest for vehicle seats, according to the previous claims, **characterised by** the fact that the bracket (1) has sides (2) that are parallel and at a distance to each other, between which the arm (5), the tilting axis (4) and the tilting axis (6) for the latch (7) are contained, whereas these sides (2) of the bracket (1) also contain a transversal bolt (3) which stops the arm (5) at its angular tilting limit.

4. A footrest for vehicle seats, according to the previous claims, **characterised by** the fact that the bar (15) that attaches the arm (5) to the hooks or cogs (13) to maintain it in the rest position, is crossways to the latch (7) and operates on respective rails (20), materialised by the long windows on the sides of the latch (7), which also has a pair of elastic pins (25), which in the arm's (5) rest position, clasp and hold the aforementioned arm's (5) tilting axis (4), strengthening the latter in the rest position.

5. A footrest for vehicle seats, according to the previous claims, **characterised by** the fact that the pedals (8) are mounted on a transversal axis (9) on the open end of the arm (5), which allows the aforementioned pedals (8) to be tilted and placed at a different angle with respect to the arm (5).

## Patentansprüche

1. Fußstütze zur Anwendung an Fahrzeugsitzen, die zur Befestigung am unteren Teil des hinteren Teiles eines Fahrzeugsitzes oder Stuhles bestimmt ist, so dass der Anwender des unmittelbar dahinter gelegenen Sitzes seine Füße auf den in der eigentlichen Fußstütze dafür bestimmten Pedalen stützen kann; gebildet aus einer Stütze (1), die am Sitz befestigt wird und mit einem Kipparm (5) verbunden ist, wobei sich am offenen Ende des Armes die Pedale (8) zum Stützen der Füße des Anwenders befinden und der vorher erwähnte Arm (5) so angebracht ist, dass dieser auf einer Querachse kippen kann und **dadurch gekennzeichnet, dass** der besagte Arm (5) mit einem Greifer (7) verbunden ist, der mittels einer Drehachse (6) an der gleichen Stütze (1) angebracht ist; wobei dieser Greifer (7) eine Querstange (15) aufweist, die durch eine Feder (19) an ihrem Platz befestigt ist und an den am Arm (5) zu diesem Zweck bereitgestellten Laschen oder Hacken (13) angebracht werden kann, mit dem Ziel den Arm in der horizontalen oder Ruhelage zu halten; wobei beim drücken des vorher erwähnten Armes (5) nach unten die Wirkung der Feder (19) überwunden wird und dem Anwender das Loslassen der Stange (15) von den Hacken oder Laschen und das Kippen des vorher erwähnten Armes (5) nach unten ermöglicht wird, wo dieser durch einen Hacken (22) im Greifer (7) in seinem Platz an den entsprechenden Querbolzen (11) und (12), die sich mit den beiden Winkelpositionen, an den sich der Arm (5) halten kann, entsprechen, gehalten wird.

2. Fußstütze für Fahrzeugsitze nach Anspruch 1, **dadurch gekennzeichnet, dass** der Greifer (7) mit einer Feder (18) verbunden ist, die an einer Drehachse (6), die auf den vorher erwähnten Greifer (7) einwirkt, angebracht ist, wobei der Arm (5) mit einer Feder (21), die mit der eigentlichen Stütze (1) verbunden ist, in Verbindung steht.

3. Fußstütze für Fahrzeugsitze nach den vorhergehenden Ansprüchen, **dadurch gekennzeichnet, dass** die Stütze (1) Seiten (2) aufweist, die parallel sind und im Abstand zueinander stehen, zwischen welchen der Arm (5), die Kippachse (4) und die Kippachse (6) für den Greifer (7) enthalten sind, wobei diese Seiten (2) der Stütze (1) auch einen Querbolzen (3) enthalten, der den Arm (5) an seiner Kippgrenze arretiert.

4. Fußstütze für Fahrzeugsitze nach den vorhergehenden Ansprüchen, **dadurch gekennzeichnet, dass** die Stange (15), die den Arm (5) mit den Hacken oder Laschen (13) verbindet, um diesen in der Ruhelage zu halten, quer zum Greifer (7) steht und sich in entsprechenden Schienen (20) bewegt, die durch die langen Fenster an den Seiten des Greifers (7) verwirklicht werden, wobei dieser auch ein Paar elastischer Stifte (25) aufweist, die in der Ruhelage des Armes (5) die Kippachse (4) des vorher erwähnten Armes (5) klemmen und befestigen, indem dieser in seiner Ruhelage versteift wird.

5. Fußstütze für Fahrzeugsitze nach den vorhergehenden Ansprüchen, **dadurch gekennzeichnet, dass** die Pedale (8) auf einer Querachse (9) am offenen Ende des Armes (5) angebracht sind, wodurch das Kippen der vorher erwähnten Pedale (8) und ihre Einstellung mit einem anderen Winkel in Bezug auf den Arm (5) ermöglicht wird.

## Revendications

1. Appui-pied à utiliser dans les sièges de véhicules, destiné à être fixé sur la partie inférieure du côté postérieur d'un siège dans un véhicule ou une chaise, de manière que l'utilisateur étant sur le siège immédiatement derrière peut appuyer ses pieds sur les pédales établies à cet effet sur le propre appui-pied; formé par un appui (1), qui est fixé au siège, auquel est uni un bras (5) basculant, tandis qu'à l'extrémité ouverte du bras se trouvent les pédales (8) pour soutenir les pieds de l'utilisateur, et le bras (5) précité est installé pour être basculé sur un axe transversal, et il est **caractérisé en ce que** ledit bras (5) est connecté à un arrêtoir (7), qui est aussi installé sur le même appui (1) au moyen d'un axe (6) giratoire; tandis que cet arrêtoir (7) a une barre (15) transversale fixée à sa place par un ressort (19), qui peut être mis en place sur les languettes ou crochets (13) pourvus à cet effet sur le bras (5), pour maintenir le bras à la position horizontale ou de repos; tandis qu'en poussant le bras (5) précité vers le bas on dépasse l'action du ressort (19) et cela permet que l'utilisateur lâche la barre (15) des crochets ou languettes (13) et de faire basculer le bras (5) précité vers le bas, où il se maintient à sa place au moyen d'un crochet (22) dans l'arrêtoir (7), dans les boulons (11) et (12) transversaux respectifs, qui correspondent aux deux positions angulaires dans lesquelles le bras (5) peut se maintenir.

2. Appui-pied pour sièges de véhicules selon la revendication 1, **caractérisé en ce que** l'arrêtoir (7) est associé à un ressort (18) monté sur un axe (6) giratoire, qui agit sur l'arrêtoir (7) précité, tandis que le bras (5) est mis en rapport avec un ressort (21) uni au propre appui (1).

3. Appui-pied pour sièges de véhicule selon les revendications antérieures, **caractérisé en ce que** l'appui (1) a des côtés (2) qui sont parallèles et ils sont à une distance l'un de l'autre, entre lesquels sont contenus le bras (5), l'axe (4) basculant et l'axe (6) basculant pour l'arrêtoir (7), tandis que ces côtés (2) de l'appui (1) contiennent aussi un boulon (3) transversal qui arrête le bras (5) à sa limite de basculement.

4. Appui-pied pour sièges de véhicules selon les revendications antérieures, **caractérisé en ce que** la barre (15) qui uni le bras (5) aux crochets ou languettes (13) pour le maintenir à la position de repos, est transversale à l'arrêtoir (7) et elle se déplace dans de rails (20) respectifs, matérialisés par les longues fenêtres se trouvant aux côtés de l'arrêtoir (7), qui a aussi une paire de chevilles (25) à ressort, lesquelles, à la position de repos du bras (5), saisissent et maintiennent l'axe (4) basculant du bras (5) précité, en le renforçant à sa position de repos.

5. Appui-pied pour sièges de véhicules selon les revendications antérieures, **caractérisé en ce que** les pédales (8) sont montées sur un axe (9) transversal à l'extrémité ouverte du bras (5), ce qui permet que les pédales (8) précitées basculent et qu'elles soient mises en place en formant un angle différent par rapport au bras (5).
